# EUROPEAN PATENT APPLICATION

(11) **EP 4 732 932 A1**
(43) Date of publication of application: **29.04.2026**
(21) Application number: 23948509.7
(22) Date of filing: 10.08.2023
(51) Int. Cl.: B01D 53/14, B01D 53/52, B01D 53/62, B01D 53/78, C01B 32/50

(54) **COMPOSITE AMINE ABSORBENT**

(71) Applicant: Mitsubishi Heavy Industries, Ltd., Tokyo 100-8332 (JP); THE KANSAI ELECTRIC POWER CO., INC., Kita-ku Osaka-shi, Osaka 530-8270 (JP)
(72) Inventor: TANAKA, Hiroshi, Tokyo 100-8332 (JP); HIRATA, Takuya, Tokyo 100-8332 (JP); TSUJIUCHI, Tatsuya, Tokyo 100-8332 (JP); SUGIURA, Takuya, Tokyo 100-8332 (JP); KAMIJO, Takashi, Tokyo 100-8332 (JP); USHIKU, Tetsu, Tokyo 100-8332 (JP); NOBORISATO, Tomoki, Tokyo 100-8332 (JP); HIGASHINO, Koji, Tokyo 100-8332 (JP)
(74) Representative: Studio Torta S.p.A.
(86) International application number: PCT/JP2023/029226
(87) International publication number: WO 2025/032794

(57) **Abstract**

A composite amine absorption liquid including (a) a diamine containing amino groups having different numbers of substituents, (b) a cyclic diamine containing amino groups having the same number of substituents, (c) a cyclic compound represented by Chemical Formula (1), and (d) water. The composite amine absorption liquid further including (e) a chain monoamine. 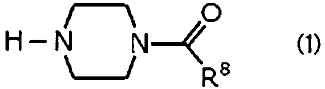 (In the formula, R⁸ is hydrogen or a methyl group.)

## Description

### [Technical Field]

The present disclosure relates to a composite amine absorption liquid.

### [Background Art]

In recent years, a greenhouse effect caused by CO₂ has been pointed out as one of causes of a global warming phenomenon of the earth, and thus, a countermeasure thereagainst has been urgently needed internationally in order to protect the global environment. As a source for generating CO₂, there is every human activity which is involved with combustion of fossil fuel, and thus, a demand for inhibited emission tends to increase more than ever. In accordance with this trend, methods for removing and recovering CO₂ from combustion exhaust gas of boilers by bringing the combustion exhaust gas into contact with an amine-based CO₂ absorbing liquid and methods for storing the recovered CO₂ without releasing it into the atmosphere are being intensively investigated for power generation facilities such as a thermal power plant, which use large amounts of fossil fuels. In addition, as a step of removing and recovering CO₂ from the combustion exhaust gas using such a CO₂ absorbing liquid, a method has been adopted, in which the combustion exhaust gas and the CO₂ absorbing liquid are brought into contact with each other in an absorber, and the CO₂-absorbed absorbing liquid is heated in a regenerator to release CO₂ and regenerate the absorbing liquid at the same time, which is then circulated back into the absorber to be reused.

As the CO₂ absorbing liquid, for example, an absorbing liquid including a propanediamine compound has been proposed (see, for example, Patent Documents 1 to 4).

### [Citation List]

### [Patent Documents]

[Patent Document 1]
   Japanese Unexamined Patent Application, First Publication No. 2005-296897
[Patent Document 2]
   Published Japanese Translation No. 2007-527791 of the PCT International Publication
[Patent Document 3]
   Japanese Patent No. 4634384
[Patent Document 4]
   Japanese Unexamined Patent Application, First Publication No. 2018-122278

### [Summary of Invention]

### [Technical Problem]

By using the absorbing liquids described in Patent Documents 1 to 4, at least one of CO₂ and H₂S included in the gas to be treated can be separated from the gas by the absorbing liquid. Here, in a case where a performance of releasing the absorbed CO₂ and H₂S is low, a large amount of energy is required to release CO₂ and H₂S from the absorbing liquid, and thus, there is a limit to improvement of the efficiency of a device.

The present disclosure has been made to solve the problems, and an object of the present disclosure is to provide a composite amine absorption liquid, a removal apparatus, and a removal method, in which the absorption performance is good and collected CO₂ and H₂S can be efficiently released.

### [Solution to Problem]

In order to achieve the object, a composite amine absorption liquid according to the present disclosure includes (a) a diamine containing amino groups having different numbers of substituents, (b) a cyclic diamine containing amino groups having the same number of substituents, (c) a cyclic compound represented by Chemical Formula (1), and (d) water. 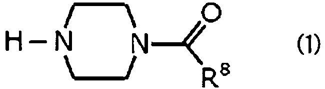 (In the formula, R⁸ is hydrogen or a methyl group.)

### [Advantageous Effects of Invention]

According to the present disclosure, with a use of an absorbing liquid obtained by dissolving (a) a diamine containing amino groups having different numbers of substituents, (b) a cyclic diamine containing amino groups having the same number of substituents, and (c) a cyclic compound represented by Chemical Formula (1) in water, and the complex intertwining of these components creates a synergistic effect by which it is possible to efficiently release collected CO₂ and H₂S while maintaining the absorbing properties of CO₂ or H₂S, or the both, and the energy efficiency can be improved.

### [Brief Description of Drawings]

FIG. 1 is a schematic view showing a configuration of a CO₂ recovery apparatus using an absorbing liquid of the present disclosure.
FIG. 2 is a view showing the results of calculation of a reduction rate of a reboiler heat duty in Example 1.
FIG. 3 is a view showing the results of calculation of a reduction rate of a reboiler heat duty in Example 2.
FIG. 4 is a view showing the results of calculation of reduction rates of reboiler heat duty in Example 2-1, Example 2-11, and Example 2-23 with respect to Comparative Example.
FIG. 5 is a view showing the results of calculation of reduction rates of absorbing liquid flow rates in Examples 2-15, 2-21, and 2-23 with respect to Comparative Example.

### [Description of Embodiments]

Hereinafter, suitable Examples of the present disclosure will be described in detail. Furthermore, it should be noted that the present disclosure is not limited by these Examples, and in a case where there are a plurality of Examples, the present disclosure also includes a configuration obtained by combining each of Examples.

### [Composite Amine absorption Liquid]

### (First Embodiment)

The composite amine absorption liquid of the present disclosure is a composite amine absorption liquid that absorbs at least one of CO₂ and H₂S in a gas, the composite amine absorption liquid including (a) a diamine containing amino groups having different numbers of substituents (a component), (b) a cyclic diamine containing amino groups having the same number of substituents (b component), (c) a cyclic compound represented by Chemical Formula (1) (c component), and (d) water (d component). That is, the composite amine absorption liquid of the present disclosure is a liquid in which (a) the diamine containing amino groups having different numbers of substituents, (b) the cyclic diamine containing amino groups having the same number of substituents, and (c) the cyclic compound represented by Chemical Formula (1) have been dissolved in water. In the present disclosure, by dissolving (a) the diamine containing amino groups having different numbers of substituents, (b) the cyclic diamine containing amino groups having the same number of substituents, and (c) the cyclic compound represented by Chemical Formula (1) in water to obtain an absorbing liquid, and the complex intertwining of these components creates a synergistic effect that improves the releasing properties of CO₂ or H₂S, or the both while maintaining the absorbing properties of CO₂ or H₂S, or the both for a gas including at least one of CO₂ and H₂S. That is, it is possible to reduce a heat duty required for the release from a reboiler while maintaining a high reaction rate of the absorbing liquid. 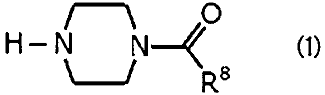 (In the formula, R⁸ is hydrogen or a methyl group.)

It is preferable that (a) the diamine containing amino groups having different numbers of substituents includes at least one of diamines containing a tertiary amino group. Examples of the diamines containing a tertiary amino group include 1-methylpiperazine, 1-ethylpiperazine, 1-propylpiperazine, 1-butylpiperazine, N,N-dimethyl-1,3-propanediamine, N,N-diethyl-1,3-propanediamine, N,N-dipropyl-1,3-propanediamine, N,N-dibutyl-1,3-propanediamine, N,N,N'-trimethyl-1,3-propanediamine, and N,N,N'-triethyl-1,3-propanediamine.

It is preferable that (a) the diamine containing amino groups having different numbers of substituents includes at least one of cyclic diamines represented by Chemical Formula (2). 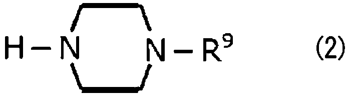 (In the formula, R⁹ is a hydrocarbon group having 1 to 4 carbon atoms.)

Examples of the cyclic diamine represented by Chemical Formula (2) include at least one selected from 1-methylpiperazine, 1-ethylpiperazine, 1-propylpiperazine, and 1-butylpiperazine.

It is preferable that (a) the diamine containing amino groups having different numbers of substituents includes at least one of chain diamines represented by Chemical Formula (3). 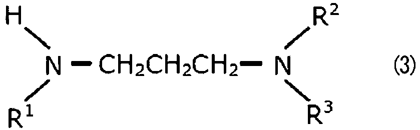 (In the formula, R¹ is hydrogen or a hydrocarbon group having 1 to 4 carbon atoms, and R² and R³ are each a hydrocarbon group having 1 to 4 carbon atoms.)

Examples of the chain diamines represented by Chemical Formula (3) include at least one selected from N,N-dimethyl-1,3-propanediamine, N,N-diethyl-1,3-propanediamine, N,N-dipropyl-1,3-propanediamine, N,N-dibutyl-1,3-propanediamine, N,N,N'-trimethyl-1,3-propanediamine, and N,N,N'-triethyl-1,3-propanediamine.

It is preferable that (b) the cyclic diamine containing amino groups having the same number of substituents includes at least one of cyclic diamines represented by Chemical Formula (4). 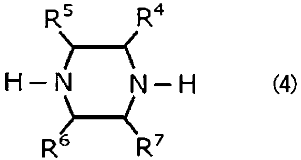 (In the formula, R⁴ to R⁷ are each hydrogen or a methyl group.)

Examples of the cyclic diamines represented by Chemical Formula (4) include at least one selected from piperazine (PZ), 2-methylpiperazine (2MPZ), and 2,5-dimethylpiperazine (DMPZ).

Examples of (c) the cyclic compound represented by Chemical Formula (1) include at least one selected from 1-formylpiperazine, 1-acetylpiperazine, and the like.

Next, it is preferable to define a blending proportion of each component (the component, the b component, the c component, and the d component) as follows. A total concentration of (a) the diamine containing amino groups having different numbers of substituents, (b) the cyclic diamine containing amino groups having the same number of substituents, and (c) the cyclic compound represented by Chemical Formula (1) is preferably 20% by mass or more and 80% by mass or less of an entirety of the absorbing liquid, and more preferably 30% by mass or more and 70% by mass or less of the entirety of the absorbing liquid. By setting the blending proportions to be in the ranges, the absorbing liquid can function favorably.

The content of (a) the diamine containing amino groups having different numbers of substituents (a component) is preferably 15% by mass or more and 60% by mass or less of the entirety of the absorbing liquid, and more preferably 20% by mass or more and 55% by mass or less of the entirety of the absorbing liquid.

The content of (b) the cyclic diamine containing amino groups having the same number of substituents (b component) is preferably 1% by mass or more and 20% by mass or less of the entirety of the absorbing liquid, and more preferably 2% by mass or more and 10% by mass or less of the entirety of the absorbing liquid.

The content of (c) the cyclic compound represented by Chemical Formula (1) is preferably 0.5% by mass or more and 30% by mass or less of the entirety of the absorbing liquid, and more preferably 1% by mass or more and 20% by mass or less of the entirety of the absorbing liquid.

The content of (d) water is preferably 20% by mass or more and 80% by mass or less of the entirety of the absorbing liquid, and more preferably 30% by mass or more and 70% by mass or less of the entirety of the absorbing liquid.

In addition, the blending proportion of (b) the cyclic diamine containing amino groups having the same number of substituents (b component) and (c) the cyclic compound represented by Chemical Formula (1) (c component) to (a) the diamine containing amino groups having different numbers of substituents is preferably for the blending such that a mass ratio of ((b) the cyclic diamine containing amino groups having the same number of substituents + (c) the cyclic compound represented by Chemical Formula (1))/(a) the diamine containing amino groups having different numbers of substituents is 0.066 or more and 0.75 or less, that is, preferably the blending satisfying 0.066 ≤ (b + c)/a ≤ 0.75, and more preferably a blending satisfying 0.088 ≤ (b + c)/a ≤ 0.52.

Moreover, the blending proportion between (b) the cyclic diamine containing amino groups having the same number of substituents and (c) the cyclic compound represented by Chemical Formula (1) is preferably for the blending such that a mass ratio of (c) the cyclic compound represented by Chemical Formula (1)/(b) the cyclic diamine containing amino groups having the same number of substituents is 0.025 or more and 3.4 or less, that is, preferably the blending satisfying 0.025 ≤ c/b ≤ 3.4, and more preferably the blending satisfying 0.14 ≤ c/b ≤ 2.9.

In addition, a blending proportion (% by mass) of the water (d component) is a weight proportion of water, which is a balance other than a total weight of (a) the diamine containing amino groups having different numbers of substituents, (b) the cyclic diamine containing amino groups having the same number of substituents, and (c) the cyclic compound represented by Chemical Formula (1).

### (Second Embodiment)

The composite amine absorption liquid of the present disclosure is a composite amine absorption liquid that absorbs at least one of CO₂ and H₂S in a gas, the composite amine absorption liquid including (a) a diamine containing amino groups having different numbers of substituents (a component), (b) a cyclic diamine containing amino groups having the same number of substituents (b component), (c) a cyclic compound represented by Chemical Formula (1) (c component), (d) water (d component), and (e) a chain monoamine (e component). That is, the composite amine absorption liquid of the present disclosure is a liquid in which (a) the diamine containing amino groups having different numbers of substituents, (b) the cyclic diamine containing amino groups having the same number of substituents, (c) the cyclic compound represented by Chemical Formula (1), and (e) the chain monoamine have been dissolved in water. In the present disclosure, by dissolving (a) the diamine containing amino groups having different numbers of substituents, (b) the cyclic diamine containing amino groups having the same number of substituents, (c) the cyclic compound represented by Chemical Formula (1), and (e) the chain monoamine in water to obtain an absorbing liquid, and the complex intertwining of these components creates a synergistic effect that improves the absorbing properties of at least one of CO₂ and H₂S for a gas including at least one of CO₂ and H₂S. That is, the reaction rate of the absorbing liquid can be increased.

It is preferable that (e) the chain monoamine includes at least one of a chain monoalkanolamine containing a primary amino group, a chain monoalkanolamine containing a secondary amino group, and a chain monoalkanolamine containing a tertiary amino group.

Examples of the chain monoalkanolamine containing a primary amino group include at least one selected from monoethanolamine (MEA), 3-amino-1-propanol, 4-amino-1-butanol, diglycolamine, 2-amino-1-propanol, 2-amino-1-butanol, 2-amino-3-methyl-1-butanol, 1-amino-2-propanol, 1-amino-2-butanol, and 2-amino-2-methyl-1-propanol.

Examples of the chain monoalkanolamine containing a secondary amino group include at least one selected from N-methylaminoethanol, N-ethylaminoethanol, N-propylaminoethanol, and N-butylaminoethanol.

Examples of the chain monoalkanolamine containing a tertiary amino group include at least one selected from N-methyldiethanolamine, N-ethyldiethanolamine, N-butyldiethanolamine, 4-dimethylamino-1-butanol, 2-dimethylaminoethanol, 2-diethylaminoethanol, 2-di-n-butylaminoethanol, N-ethyl-N-methylethanolamine, 3-dimethylamino-1-propanol, and 2-dimethylamino-2-methyl-1-propanol.

Next, it is preferable to define a blending proportion of each component (the a component, the b component, the c component, the d component, and the e component) as follows. A total concentration of (a) the diamine containing amino groups having different numbers of substituents, (b) the cyclic diamine containing amino groups having the same number of substituents, (c) the cyclic compound represented by Chemical Formula (1), and (e) the chain monoamine (e component) is preferably 20% by mass or more and 80% by mass or less of the entirety of the absorbing liquid, and more preferably 30% by mass or more and 70% by mass or less of the entirety of the absorbing liquid. By setting the blending proportions to be in the ranges, the absorbing liquid can function favorably.

The content of (a) the diamine containing amino groups having different numbers of substituents (a component) is preferably 0.5% by mass or more and 50% by mass or less of the entirety of the absorbing liquid, and more preferably 1% by mass or more and 40% by mass or less of the entirety of the absorbing liquid.

The content of (b) the cyclic diamine containing amino groups having the same number of substituents (b component) is preferably 1% by mass or more and 20% by mass or less of the entirety of the absorbing liquid, and more preferably 2% by mass or more and 10% by mass or less of the entirety of the absorbing liquid.

The content of (c) the cyclic compound represented by Chemical Formula (1) is preferably 0.5% by mass or more and 30% by mass or less of the entirety of the absorbing liquid, and more preferably 1% by mass or more and 20% by mass or less of the entirety of the absorbing liquid.

The content of (d) water is preferably 20% by mass or more and 80% by mass or less of the entirety of the absorbing liquid, and more preferably 30% by mass or more and 70% by mass or less of the entirety of the absorbing liquid.

The content of (e) the chain monoamine is preferably 5% by mass or more and 55% by mass or less of the entirety of the absorbing liquid, and more preferably 10% by mass or more and 50% by mass or less of the entirety of the absorbing liquid.

In addition, a blending proportion of (b) the cyclic diamine containing amino groups having the same number of substituents (b component), (c) the cyclic compound represented by Chemical Formula (1) (c component), and (e) the chain monoamine (e component) to (a) the diamine containing amino groups having different numbers of substituents (a component) is preferably for the blending such that a mass ratio of ((b) the cyclic diamine containing amino groups having the same number of substituents + (c) the cyclic compound represented by Chemical Formula (1) + (e) the chain monoamine)/(a) the diamine containing amino groups having different numbers of substituents is 0.40 or more and 119 or less, that is, the blending satisfying 0.40 ≤ (b + c + e)/a ≤ 119, and more preferably the blending satisfying 0.48 ≤ (b + c + e)/a ≤ 113.

Moreover, the blending proportion between (b) the cyclic diamine containing amino groups having the same number of substituents and (c) the cyclic compound represented by Chemical Formula (1) is preferably for the blending such that a mass ratio of (c) the cyclic compound represented by Chemical Formula (1)/(b) the cyclic diamine containing amino groups having the same number of substituents is 0.033 or more and 6.7 or less, that is, the blending satisfying 0.033 ≤ c/b ≤ 6.7, and more preferably the blending satisfying 0.16 ≤ c/b ≤ 1.3.

In addition, the blending proportion between (c) the cyclic compound represented by Chemical Formula (1) and (e) the chain monoamine is preferably such that a mass ratio of (e) the chain monoamine/(c) the cyclic compound represented by Chemical Formula (1) is 0.6 or more and 112 or less, that is, preferably 0.6 ≤ e/c ≤ 112, and more preferably 1.2 ≤ e/c ≤ 106.

In addition, the blending proportion (% by mass) of the water (d component) is a weight proportion of water, which is a balance to a total weight of (a) the diamine containing amino groups having different numbers of substituents, (b) the cyclic diamine containing amino groups having the same number of substituents, (c) the cyclic compound represented by Chemical Formula (1), and (e) the chain monoamine.

In the present disclosure, for example, an absorption temperature of the absorber in a chemical absorption method at the time of a contact with an exhaust gas containing CO₂ and the like is usually preferably in a range of 30°C to 80°C. In addition, a corrosion inhibitor, a deterioration inhibitor, or the like may be added to the absorbing liquid used in the present disclosure, as necessary.

In addition, a CO₂ partial pressure at the CO₂ absorber entrance at the time of absorption in which CO₂ in a gas to be treated is absorbed is preferably a low CO₂ partial pressure (for example, 0.003 MPa to 0.1 MPa) in view of the application of the chemical absorption method.

In the present disclosure, with regard to a regeneration temperature in the regenerator that releases CO₂ and the like from the absorbing liquid that has absorbed CO₂ and the like, in a case where the pressure inside the regenerator is 130 kPa to 200 kPa (absolute pressure), the tower bottom temperature of the absorbing liquid regenerator is preferably 110°C or higher. This is because in the case of the regeneration at a temperature lower than 110°C, it is necessary to increase the amount of the absorbing liquid circulated in the system, which is thus not preferable from the viewpoint of a regeneration efficiency. More suitably, the regeneration is preferably performed at 115°C or higher.

Examples of the gas to be treated by the present disclosure include, but are not limited to, a coal gasification gas, a synthetic gas, a coke oven gas, a petroleum gas, a natural gas, and a combustion exhaust gas, and any of the gases may be used as long as it includes an acidic gas such as CO₂ and H₂S.

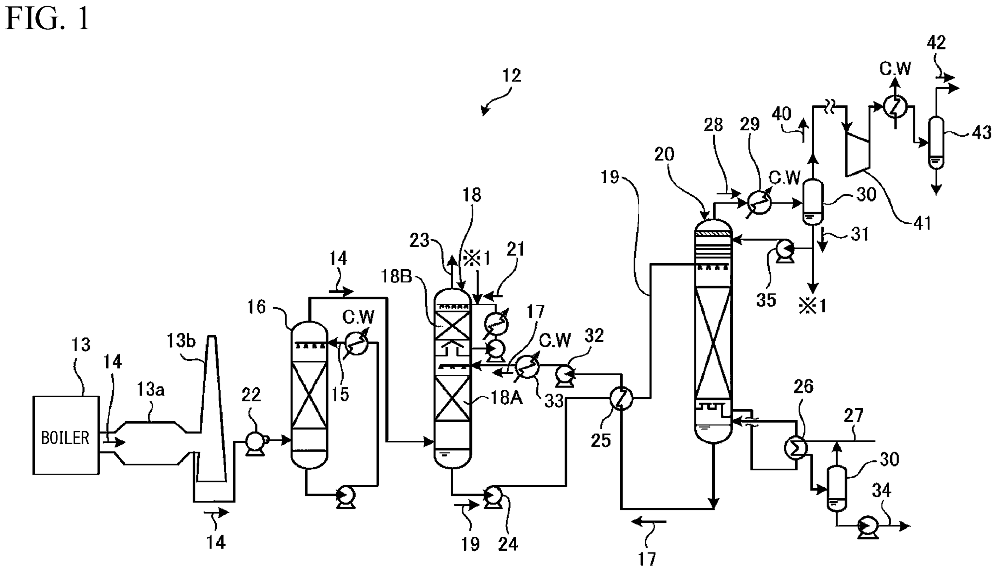

A process that can be adopted in a method for removing at least one of CO₂ and H₂S in a gas of the present disclosure is not particularly limited, and an example of a removal apparatus that removes CO₂ will be described with reference to FIG. 1.

FIG. 1 is a schematic view showing a configuration of a CO₂ recovery apparatus according to Example 1. As shown in FIG. 1, a CO₂ recovery apparatus 12 according to Example 1 has an exhaust gas cooling apparatus 16 that cools an exhaust gas 14 containing CO₂ and O₂ discharged from an industrial combustion equipment 13 such as a boiler and a gas turbine, through cooling water 15, a CO₂ absorber 18 having a CO₂ absorption section 18A that brings the exhaust gas 14 containing cooled CO₂ into contact with a CO₂ absorbing liquid (hereinafter also referred to as an "absorbing liquid") 17 that absorbs CO₂ to remove CO₂ from the exhaust gas 14, and an absorbing liquid regenerator 20 that releases CO₂ from the CO₂ absorbing liquid (hereinafter also referred to as a "rich solution") 19 that has absorbed CO₂ to regenerate the CO₂ absorbing liquid. Furthermore, in the CO₂ recovery apparatus 12, the regenerated CO₂ absorbing liquid (hereinafter also referred to as a "lean solution") 17 from which CO₂ has been removed in the absorbing liquid regenerator 20 is reused as the CO₂ absorbing liquid in the CO₂ absorber 18.

Furthermore, in FIG. 1, reference numeral 13a denotes a flue, reference numeral 13b denotes a smokestack, and reference numeral 34 denotes steam condensate water. The CO₂ recovery apparatus 12 may be provided by post-installation to capture CO₂ from an existing exhaust gas source, or may be installed simultaneously with a new exhaust gas source. Moreover, an openable or closable damper is installed in the line of the exhaust gas 14, and is opened in a case where the CO₂ recovery apparatus 12 is in operation. In addition, in a case where the exhaust gas source is in operation, but the operation of the CO₂ recovery apparatus 12 is stopped, the damper is set to be closed.

In a CO₂ recovery method using the CO₂ recovery apparatus 12, first, the exhaust gas 14 from the industrial combustion equipment 13 such as a boiler and a gas turbine, including CO₂, is pressurized by an exhaust gas blower 22, then sent to an exhaust gas cooling apparatus 16, cooled by cooling water 15, and sent to a CO₂ absorber 18.

In the CO₂ absorber 18, the exhaust gas 14 is brought into countercurrent contact with a CO₂ absorbing liquid 17 which is an amine absorption liquid according to the present embodiment, and the CO₂ in the exhaust gas 14 is absorbed by the CO₂ absorbing liquid 17 by a chemical reaction. The CO₂ removal exhaust gas after the CO₂ is removed by the CO₂ absorption section 18A is brought into contact with s circulating washing water 21 including the CO₂ absorbing liquid supplied from a nozzle in a water washing section 18B in the CO₂ absorber 18, the CO₂ absorbing liquid 17 accompanied by the CO₂ removal exhaust gas is recovered, and then the exhaust gas 23 from which the CO₂ has been removed is released to the outside of the system. In addition, the rich solution 19, which is the CO₂ absorbing liquid that has absorbed CO₂, is pressurized by and rich solution pump 24, heated by the lean solution 17, which is the CO₂ absorbing liquid regenerated in the absorbing liquid regenerator 20, in a rich-lean solution heat exchanger 25, and supplied to the absorbing liquid regenerator 20.

The rich solution 19 released from the upper part of the absorbing liquid regenerator 20 to the inside undergoes an endothermic reaction due to a water vapor supplied from the lower part to release most of the CO₂. The CO₂ absorbing liquid which has released a part or a majority of CO₂ in the absorbing liquid regenerator 20 is referred to as a semi-lean solution. By the time the semi-lean solution reaches the lower part of the absorbing liquid regenerator 20, the semi-lean solution becomes the CO₂ absorbing liquid (lean solution) 17 from which substantially all the CO₂ has been removed. A part of this lean solution 17 is superheated by water vapor 27 in a reboiler 26, and water vapor for CO₂ desorption is supplied into the absorbing liquid regenerator 20.

On the other hand, from the top portion of the absorbing liquid regenerator 20, a CO₂ accompanying gas 28 with water vapor released from the rich solution 19 and the semi-lean solution in the tower is led out, the water vapor is condensed by the condenser 29, the water is separated in a separation drum 30, and the CO₂ gas 40 is released to the outside of the system, compressed by a separate compressor 41, and recovered. The compressed and recovered CO₂ gas 42 is passed through a separation drum 43, and then injected into an oil field using an enhanced oil recovery (EOR) method or stored in an aquifer as measures against global warming. A reflux water 31 separated and refluxed in the separation drum 30 from the CO₂ accompanying gas 28 with water vapor is supplied to each of the upper part of the absorbing liquid regenerator 20 and the washing water 21 side by a reflux water circulation pump 35. The regenerated CO₂ absorbing liquid (lean solution) 17 is cooled by the rich solution 19 in the rich-lean solution heat exchanger 25, pressurized by a lean solution pump 32, cooled by a lean solution cooler 33, and then supplied into the CO₂ absorber 18.

Furthermore, in this embodiment, the outline is described and some of the attached devices are omitted in the description.

### [Examples]

Hereinafter, the present disclosure will be described in more detail with reference to Examples, but the present disclosure is not limited to the following Examples.

### [Examples]

Absorption of CO₂ was performed using an absorption test device (not shown). The components of Examples are listed in Table 1. Here, an absorbing liquid including (a) a diamine containing amino groups having different numbers of substituents (a component), (b) a cyclic diamine containing amino groups having the same number of substituents (b component), (c) a cyclic compound represented by Chemical Formula (1) (c component), and (d) water (d component) was prepared.

In Examples 1-1 to 1-14, the mass ratio of (b + c)/a was set to 0.088 or more and 0.75 or less, and the mass ratio of c/b was set to 0.025 or more and 3.4 or less.

**[Table 1]**

| Example | (a) Diamine containing amino groups having different numbers of substituents | | (b) Cyclic diamine containing amino groups having the same number of substituents | (c) Cyclic compound represented by Chemical Formula (1) | |
|---|---|---|---|---|---|
| | | | | Component | Concentration of (c) [% by mass] |
| 1-1 | N,N-Dimethyl-1,3-propanediamine | - | Piperazine | 1-Formylpiperazine | 1 |
| 1-2 | N,N-Dimethyl-1,3-propanediamine | - | Piperazine | 1-Formylpiperazine | 10 |
| 1-3 | N,N-Dimethyl-1,3-propanediamine | - | Piperazine | 1-Formylpiperazine | 20 |
| 1-4 | N,N-Dimethyl-1,3-propanediamine | - | 2-Methylpiperazine | 1-Formylpiperazine | |
| 1-5 | N,N-Dimethyl-1,3-propanediamine | - | Piperazine | 1-Acetylpiperazine | |
| 1-6 | N,N-Diethyl-1,3-propanediamine | - | Piperazine | 1-Formylpiperazine | |
| 1-7 | N,N,N'-Trimethyl-1,3-propanediamine | - | Piperazine | 1-Formylpiperazine | |
| 1-8 | N,N,N'-Triethyl-1,3-propanediamine | - | Piperazine | 1-Formylpiperazine | 0.5 to 10 |
| 1-9 | 1-Methylpiperazine | - | Piperazine | 1-Formylpiperazine | |
| 1-10 | 1-Methylpiperazine | - | 2-Methylpiperazine | 1-Formylpiperazine | |
| 1-11 | 1-Ethylpiperazine | - | Piperazine | 1-Formylpiperazine | |
| 1-12 | 1-Ethylpiperazine | - | 2-Methylpiperazine | 1-Formylpiperazine | |
| 1-13 | N,N-Dimethyl-1,3-propanediamine | 1-Methylpiperazine | Piperazine | 1-Formylpiperazine | |
| 1-14 | N,N-Diethyl-1,3-propanediamine | 1-Ethylpiperazine | Piperazine | 1-Formylpiperazine | |

### [Example 1-1]

In Example 1-1, N,N-dimethyl-1,3-propanediamine was used as (a) the diamine containing amino groups having different numbers of substituents (a component), piperazine was used as (b) the cyclic diamine containing amino groups having the same number of substituents (b component), 1-formylpiperazine was used as (c) the cyclic compound represented by Chemical Formula (1) (c component), and these components were dissolved in (d) water (d component) and mixed to obtain an absorbing liquid. In Example 1-1, the concentration of the c component with respect to the entire absorbing liquid (100% by mass) was 1% by mass.

### [Example 1-2]

In Example 1-2, the same amine component as in Example 1-1 was used and the concentration of the c component with respect to the entire absorbing liquid (100% by mass) was set to 10% by mass.

### [Example 1-3]

In Example 1-3, the same amine component as in Example 1-1 was used and the concentration of the c component with respect to the entire absorbing liquid (100% by mass) was set to 20% by mass.

Next, in Examples 1-4 and 1-14, the concentration of the c component with respect to the entire absorbing liquid (100% by mass) was set to 0.5% by mass or more and 10% by mass or less.

### [Example 1-4]

In Example 1-4, the composition of the absorbing liquid was the same as in Example 1-1, except that 2-methylpiperazine was used as (b) the cyclic diamine containing amino groups having the same number of substituents (b component).

### [Example 1-5]

In Example 1-5, the composition of the absorbing liquid was the same as in Example 1-1, except that 1-acetylpiperazine was used as (c) the cyclic compound represented by Chemical Formula (1) (c component).

### [Example 1-6]

In Example 1-6, the composition of the absorbing liquid was the same as in Example 1-1, except that N,N-diethyl-1,3-propanediamine was used as (a) the diamine containing amino groups having different numbers of substituents (a component).

### [Example 1-7]

In Example 1-7, the composition of the absorbing liquid was the same as in Example 1-1, except that N,N,N'-trimethyl-1,3-propanediamine was used as (a) the diamine containing amino groups having different numbers of substituents (a component).

### [Example 1-8]

In Example 1-8, the composition of the absorbing liquid was the same as in Example 1-1, except that N,N,N'-triethyl-1,3-propanediamine was used as (a) the diamine containing amino groups having different numbers of substituents (a component).

### [Example 1-9]

In Example 1-9, the composition of the absorbing liquid was the same as in Example 1-1, except that 1-methylpiperazine was used as (a) the diamine containing amino groups having different numbers of substituents (a component).

### [Example 1-10]

In Example 1-10, the composition of the absorbing liquid was the same as in Example 1-1, except that 1-methylpiperazine was used as (a) the diamine containing amino groups having different numbers of substituents (a component), and 2-methylpiperazine was used as (b) the cyclic diamine containing amino groups having the same number of substituents (b component).

### [Example 1-11]

In Example 1-11, the composition of the absorbing liquid was the same as in Example 1-1, except that 1-ethylpiperazine was used as (a) the diamine containing amino groups having different numbers of substituents (a component).

### [Example 1-12]

In Example 1-12, the composition of the absorbing liquid was the same as in Example 1-1, except that 1-ethylpiperazine was used as (a) the diamine containing amino groups having different numbers of substituents (a component), and 2-methylpiperazine was used as (b) the cyclic diamine containing amino groups having the same number of substituents (b component).

### [Example 1-13]

In Example 1-13, the composition of the absorbing liquid was the same as in Example 1-1, except that N,N-dimethyl-1,3-propanediamine and 1-methylpiperazine were used as (a) the diamine containing amino groups having different numbers of substituents (a component).

### [Example 1-14]

In Example 1-14, the composition of the absorbing liquid was the same as in Example 1-1, except that N,N-diethyl-1,3-propanediamine and 1-ethylpiperazine were used as (a) the diamine containing amino groups having different numbers of substituents (a component).

A reduction rate of the reboiler heat duty was measured for each Example. For the implementation conditions, the absorption conditions are 40°C and 10 kPa CO₂, and the regeneration condition is 115°C.

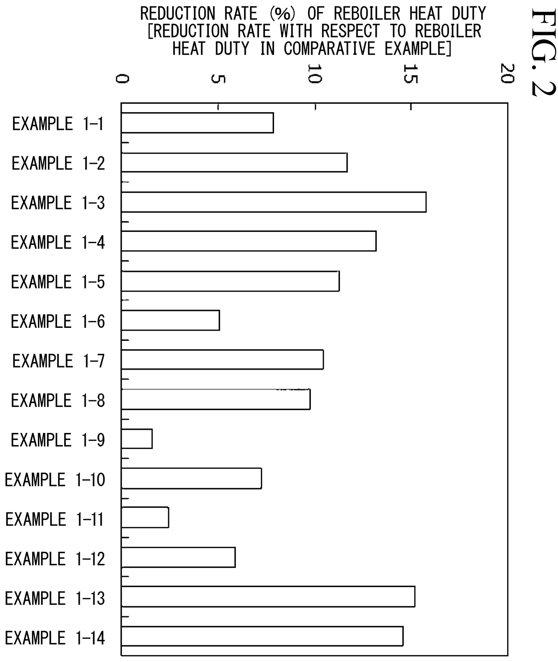

In each Example, the results of calculation of the reduction rates of the reboiler heat duty of Examples are shown in FIG. 2.

From the results shown in FIG. 2, it was found that the absorbing liquids of Examples 1-1 to 1-14 can provide an absorbing liquid having excellent energy saving properties, as compared with methods in the related art, and a reduction in CO₂ recovery heat duty can be achieved. Specifically, it was found that the reboiler heat duty can be reduced by about 2% to about 16%, as compared with the related art.

Next, an absorbing liquid including (a) the diamine containing amino groups having different numbers of substituents (a component), (b) the cyclic diamine containing amino groups having the same number of substituents (b component), (c) the cyclic compound represented by Chemical Formula (1) (c component), water (d component), and (e) the chain monoamine (e component) was obtained. The components of Examples are listed in Table 2.

In Examples 2-1 to 2-18, the mass ratio of (b + c + e)/a was set to 0.40 or more and 119 or less, the mass ratio of c/b was set 0.033 or more and 6.7 or less, and the mass ratio of e/c was set to 0.6 or more and 112 or less.

**[Table 2]**

| Example | (a) Diamine containing amino groups having different numbers of substituents | (b) Cyclic diamine containing amino groups having the same number of substituents | (e) Chain monoamine | | (c) Cyclic compound represented by Chemical Formula (1) | |
|---|---|---|---|---|---|---|
| | | | | | Component | Concentration of (c) [% by mass] |
| 2-1 | N,N-Dimethyl-1,3-propanediamine | Piperazine | Monoethanolamine | 2-Amino-2-methyl-1-propanol | 1-Formylpiperazine | 1 |
| 2-2 | N,N-Dimethyl-1,3-propanediamine | Piperazine | Monoethanolamine | 2-Amino-2-methyl-1-propanol | 1-Formylpiperazine | 10 |
| 2-3 | N,N-Dimethyl-1,3-propanediamine | Piperazine | Monoethanolamine | 2-Amino-2-methyl-1-propanol | 1-Formylpiperazine | 20 |
| 2-4 | N,N-Dimethyl-1,3-propanediamine | 2-Methylpiperazine | Monoethanolamine | 2-Amino-2-methyl-1-propanol | 1-Acetylpiperazine | |
| 2-5 | N,N-Diethyl-1,3-propanediamine | Piperazine | Monoethanolamine | 2-Amino-2-methyl-1-propanol | 1-Formylpiperazine | |
| 2-6 | 1-Methylpiperazine | Piperazine | Monoethanolamine | 2-Amino-2-methyl-1-propanol | 1-Formylpiperazine | |
| 2-7 | N,N-Diethyl-1,3-propanediamine | 2-Methylpiperazine | N-Ethylaminoethanol | - | 1-Formylpiperazine | |
| 2-8 | N,N-Diethyl-1,3-propanediamine | Piperazine | N-Ethylaminoethanol | - | 1-Formylpiperazine | |
| 2-9 | 1-Ethylpiperazine | Piperazine | N-Ethylaminoethanol | - | 1-Formylpiperazine | |
| 2-10 | N,N-Diethyl-1,3-propanediamine | 2-Methylpiperazine | N-Butylaminoethanol | - | 1-Formylpiperazine | |
| 2-11 | N,N-Diethyl-1,3-propanediamine | Piperazine | N-Butylaminoethanol | - | 1-Formylpiperazine | |
| 2-12 | N,N,N'-Trimethyl-1,3-propanediamine | 2-Methylpiperazine | N-Ethylaminoethanol | 2-Amino-2-methyl-1-propanol | 1-Formylpiperazine | |
| 2-13 | N,N-Diethyl-1,3-propanediamine | Piperazine | N-Butylaminoethanol | 2-Amino-2-methyl-1-propanol | 1-Formylpiperazine | 0.5 to 10 |
| 2-14 | N,N-Diethyl-1,3-propanediamine | Piperazine | N-Methyldiethanolamine | 2-Amino-2-methyl-1-propanol | 1-Formylpiperazine | |
| 2-15 | 1-Methylpiperazine | Piperazine | N-Methyldiethanolamine | 2-Amino-2-methyl-l-propanol | 1-Formylpiperazine | |
| 2-16 | N,N-Diethyl-1,3-propanediamine | Piperazine | N-Methyldiethanolamine | N-Ethylaminoethanol | 1-Formylpiperazine | |
| 2-17 | N,N-Diethyl-1,3-propanediamine | Piperazine | N-Methyldiethanolamine | N-Butylaminoethanol | 1-Formylpiperazine | |
| 2-18 | N,N-Diethyl-1,3-propanediamine | Piperazine | N-Ethyldiethanolamine | 2-Amino-2-methyl-1-propanol | 1-Formylpiperazine | |
| 2-19 | N,N-Diethyl-1,3-propanediamine | Piperazine | N-Ethyldiethanolamine | N-Ethylaminoethanol | 1-Formylpiperazine | |
| 2-20 | 1-Ethylpiperazine | Piperazine | N-Ethyldiethanolamine | N-Ethylaminoethanol | 1-Formylpiperazine | |
| 2-21 | N,N-Diethyl-1,3-propanediamine | Piperazine | N-Ethyldiethanolamine | N-Butylaminoethanol | 1-Formylpiperazine | |
| 2-22 | N,N,N'-Triethyl-1,3-propanediamine | Piperazine | 4-Dimethylamino-1-butanol | 2-Amino-2-methyl-1-propanol | 1-Formylpiperazine | |
| 2-23 | N,N-Dimethyl-1,3-propanediamine | Piperazine | 4-Dimethylamino-1-butanol | 2-Amino-2-methyl-1-propanol | 1-Formylpiperazine | |

### [Example 2-1]

In Example 2-1, N,N-dimethyl-1,3-propanediamine was used as (a) the diamine containing amino groups having different numbers of substituents (a component), piperazine was used as (b) the cyclic diamine containing amino groups having the same number of substituents (b component), 1-formylpiperazine was used as (c) the cyclic compound represented by Chemical Formula (1) (c component), monoethanolamine and 2-amino-2-methyl-1-propanol were used as (e) the chain monoamine, and these components were dissolved in water (d component) and mixed to obtain an absorbing liquid. In Example 2-1, the concentration of the c component with respect to the entire absorbing liquid (100% by mass) was 1% by mass.

### [Example 2-2]

In Example 2-2, the same amine component as in Example 2-1 was used and the concentration of the c component with respect to the entire absorbing liquid (100% by mass) was set to 10% by mass.

### [Example 2-3]

In Example 2-3, the same amine component as in Example 2-1 was used and the concentration of the c component with respect to the entire absorbing liquid (100% by mass) was set to 20% by mass.

Next, in Examples 2-4 to 2-23, the concentration of the c component with respect to the entire absorbing liquid (100% by mass) was set to 0.5% by mass or more and 10% by mass or less.

### [Example 2-4]

In Example 2-4, the composition of the absorbing liquid was the same as in Example 2-1, except that 2-methylpiperazine was used as (b) the cyclic diamine containing amino groups having the same number of substituents (b component) and 1-acetylpiperazine was used as (c) the cyclic compound represented by Chemical Formula (1) (c component).

### [Example 2-5]

In Example 2-5, the composition of the absorbing liquid was the same as in Example 2-1, except that N,N-diethyl-1,3-propanediamine was used as (a) the diamine containing amino groups having different numbers of substituents (a component).

### [Example 2-6]

In Example 2-6, the composition of the absorbing liquid was the same as in Example 2-1, except that 1-methylpiperazine was used as (a) the diamine containing amino groups having different numbers of substituents (a component).

### [Example 2-7]

In Example 2-7, the composition of the absorbing liquid was the same as in Example 2-1, except that N,N-diethyl-1,3-propanediamine was used as (a) the diamine containing amino groups having different numbers of substituents (a component), 2-methylpiperazine was used as (b) the cyclic diamine containing amino groups having the same number of substituents (b component), and N-ethylaminoethanol was used as (e) the chain monoamine (e component).

### [Example 2-8]

In Example 2-8, the composition of the absorbing liquid was the same as in Example 2-1, except that N,N-diethyl-1,3-propanediamine was used as (a) the diamine containing amino groups having different numbers of substituents (a component) and N-ethylaminoethanol was used as (e) the chain monoamine (e component).

### [Example 2-9]

In Example 2-9, the composition of the absorbing liquid was the same as in Example 2-1, except that 1-ethylpiperazine was used as (a) the diamine containing amino groups having different numbers of substituents (a component) and N-ethylaminoethanol was used as (e) the chain monoamine (e component).

### [Example 2-10]

In Example 2-10, the composition of the absorbing liquid was the same as in Example 2-1, except that N,N-diethyl-1,3-propanediamine was used as (a) the diamine containing amino groups having different numbers of substituents (a component), 2-methylpiperazine was used as (b) the cyclic diamine containing amino groups having the same number of substituents (b component), and N-butylaminoethanol was used as (e) the chain monoamine (e component).

### [Example 2-11]

In Example 2-11, the composition of the absorbing liquid was the same as in Example 2-1, except that N,N-diethyl-1,3-propanediamine was used as (a) the diamine containing amino groups having different numbers of substituents (a component) and N-butylaminoethanol was used as (e) the chain monoamine (e component).

### [Example 2-12]

In Example 2-12, the composition of the absorbing liquid was the same as in Example 2-1, except that N,N,N'-diethyl-1,3-propanediamine was used as (a) the diamine containing amino groups having different numbers of substituents (a component), 2-methylpiperazine was used as (b) the cyclic diamine containing amino groups having the same number of substituents (b component), and N-ethylaminoethanol and 2-amino-2-methyl-1-propanol were used as (e) the chain monoamine (e component).

### [Example 2-13]

In Example 2-13, the composition of the absorbing liquid was the same as in Example 2-1, except that N,N-diethyl-1,3-propanediamine was used as (a) the diamine containing amino groups having different numbers of substituents (a component), and N-butylaminoethanol and 2-amino-2-methyl-1-propanol were used as (e) the chain monoamine (e component).

### [Example 2-14]

In Example 2-14, the composition of the absorbing liquid was the same as in Example 2-1, except that N,N-diethyl-1,3-propanediamine was used as (a) the diamine containing amino groups having different numbers of substituents (a component), and N-methyldiethanolamine and 2-amino-2-methyl-1-propanol were used as (e) the chain monoamine (e component).

### [Example 2-15]

In Example 2-15, the composition of the absorbing liquid was the same as in Example 2-1, except that 1-methylpiperazine was used as (a) the diamine containing amino groups having different numbers of substituents (a component), and N-methyldiethanolamine and 2-amino-2-methyl-1-propanol were used as (e) the chain monoamine (e component).

### [Example 2-16]

In Example 2-16, the composition of the absorbing liquid was the same as in Example 2-1, except that N,N-diethyl-1,3-propanediamine was used as (a) the diamine containing amino groups having different numbers of substituents (a component), and N-methyldiethanolamine and N-ethylaminoethanol were used as (e) the chain monoamine (e component).

### [Example 2-17]

In Example 2-17, the composition of the absorbing liquid was the same as in Example 2-1, except that N,N-diethyl-1,3-propanediamine was used as (a) the diamine containing amino groups having different numbers of substituents (a component), and N-methyldiethanolamine and N-butylaminoethanol were used as (e) the chain monoamine (e component).

### [Example 2-18]

In Example 2-18, the composition of the absorbing liquid was the same as in Example 2-1, except that N,N-diethyl-1,3-propanediamine was used as (a) the diamine containing amino groups having different numbers of substituents (a component), and N-ethyldiethanolamine and 2-amino-2-methyl-1-propanol were used as (e) the chain monoamine (e component).

### [Example 2-19]

In Example 2-19, the composition of the absorbing liquid was the same as in Example 2-1, except that N,N-diethyl-1,3-propanediamine was used as (a) the diamine containing amino groups having different numbers of substituents (a component), and N-ethyldiethanolamine and N-ethylaminoethanol were used as (e) the chain monoamine (e component).

### [Example 2-20]

In Example 2-20, the composition of the absorbing liquid was the same as in Example 2-1, except that 1-ethylpiperazine was used as (a) the diamine containing amino groups having different numbers of substituents (a component), and N-ethyldiethanolamine and N-ethylaminoethanol were used as (e) the chain monoamine (e component).

### [Example 2-21]

In Examples 2-21, the composition of the absorbing liquid was the same as in Example 2-1, except that N,N-diethyl-1,3-propanediamine was used as (a) the diamine containing amino groups having different numbers of substituents (a component), and N-ethyldiethanolamine and N-butylaminoethanol were used as (e) the chain monoamine (e component).

### [Example 2-22]

In Example 2-22, the composition of the absorbing liquid was the same as in

Example 2-1, except that N,N,N'-triethyl-1,3-propanediamine was used as (a) the diamine containing amino groups having different numbers of substituents (a component), and 4-dimethylamino-1-butanol and 2-amino-2-methyl-1-propanol were used as (e) the chain monoamine (e component).

### [Example 2-23]

In Example 2-23, the composition of the absorbing liquid was the same as in Example 2-1, except that 4-dimethylamino-1-butanol and 2-amino-2-methyl-1-propanol were used as (e) the chain monoamine (e component).

A reduction rate of the reboiler heat duty was measured for each Example. The implementation conditions were the same as in Examples 1-1 to 1-14.

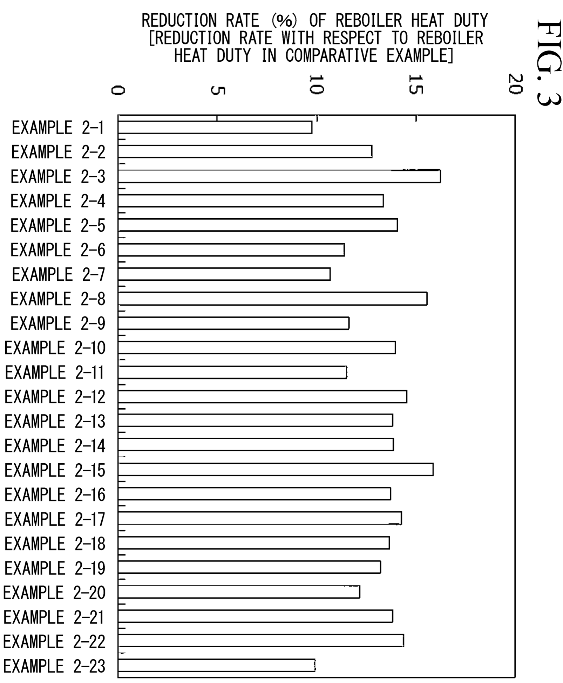

In each Example, the results of calculation of the reduction rates of the reboiler heat duty of Examples are shown in FIG. 3.

From the results shown in FIG. 3, it was found that the absorbing liquids of Examples 2-1 to 2-23 can provide an absorbing liquid having excellent energy saving properties, as compared with methods in the related art, and the reduction in CO₂ recovery heat duty can be achieved. Specifically, it was found that the reboiler heat duty can be reduced by about 10% to about 16%, as compared with the related art.

In Examples 2-1, 2-11, and 2-23, as Comparative Example, (e) the chain monoamine was not contained, (a) the diamine containing amino groups having different numbers of substituents, (b) the cyclic diamine containing amino groups having the same number of substituents, and (c) the cyclic compound represented by Chemical Formula (1) were the same as those in Examples, the concentrations of (b) the cyclic diamine containing amino groups having the same number of substituents and (c) the cyclic compound represented by Chemical Formula (1) were the same as in Examples, the concentration of (a) the diamine containing amino groups having different numbers of substituents was increased by the concentration reduction of (e) the chain monoamine, and the total concentration of the components other than (d) water was set to the same concentration as in Examples and set to the concentration corresponding to Examples.

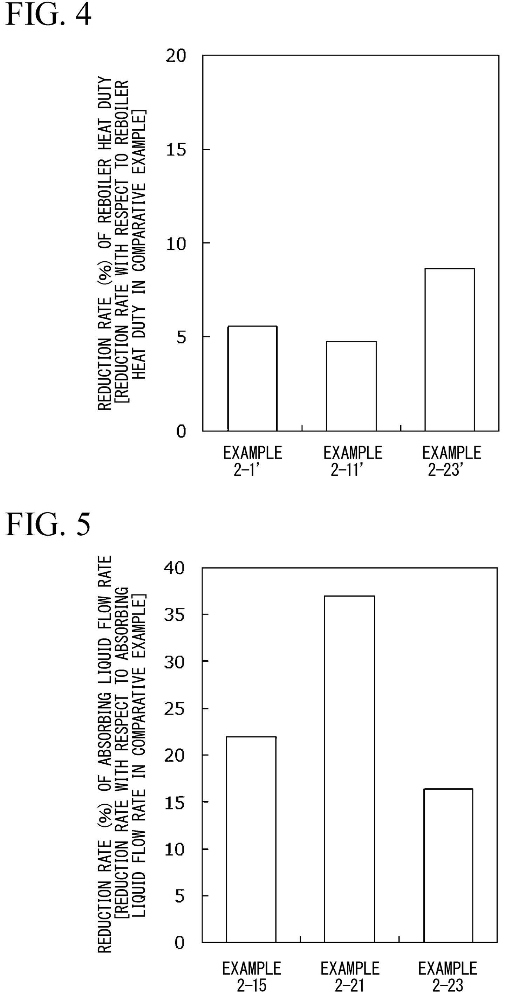

In each Example, the results of calculation of the reduction rates of the reboiler heat duty of Examples 2-1, 2-11, and 2-23 with respect to Comparative Example are shown in FIG. 4.

From the results shown in FIG. 4, it was found that the reduction rates of the heat duty of Examples 2-1, 2-11, and 2-23 are about 5% to about 9% with respect to Comparative Example, and a further reduction in the reboiler heat duty can be achieved by the blending of (e) the chain monoamine.

In Examples 2-15, 2-21, and 2-23, the results of calculation of the reduction rates of the absorbing liquid flow rates with respect to Comparative Example with 30% by mass of monoethanolamine are shown in FIG. 5.

From the results shown in FIG. 5, it was found that the reduction rates of the absorbing liquid flow rates of Examples 2-15, 2-21, and 2-23 with respect to Comparative Example are about 16% to about 37%, and the equipment can be made compact by significantly reducing the absorbing liquid heat duty.

### <Additional Remark>

The composite amine absorption liquid described in each embodiment is, for example, as follows.
(1) The composite amine absorption liquid according to the first aspect is a composite amine absorption liquid that absorbs at least one of CO₂ and H₂S in a gas, and includes (a) a diamine containing amino groups having different numbers of substituents, (b) a cyclic diamine containing amino groups having the same number of substituents, (c) a cyclic compound represented by Chemical Formula (1), and (d) water.
   According to the configuration, it is possible to provide the composite amine absorption liquid having excellent energy saving properties, and the CO₂ recovery heat duty can be reduced.
(2) The composite amine absorption liquid according to the second aspect further includes (e) a chain monoamine.
   According to the configuration, it is possible to provide a composite amine absorption liquid having more excellent energy saving properties than in the first aspect, and the CO₂ recovery heat duty can be reduced.
(3) In the composite amine absorption liquid according to the third aspect, (a) the diamine containing amino groups having different numbers of substituents includes at least one of diamines containing a tertiary amino group.
   According to the configuration, it is possible to provide the composite amine absorption liquid having excellent energy saving properties, and the CO₂ recovery heat duty can be reduced.
(4) In the composite amine absorption liquid according to the fourth aspect, (a) the diamine containing amino groups having different numbers of substituents includes at least one of cyclic diamines represented by Chemical Formula (2).
   According to the configuration, it is possible to provide the composite amine absorption liquid having excellent energy saving properties, and the CO₂ recovery heat duty can be reduced.
(5) In the composite amine absorption liquid according to the fifth aspect, (a) the diamine containing amino groups having different numbers of substituents includes at least one of chain diamines represented by Chemical Formula (3).
   According to the configuration, it is possible to provide the composite amine absorption liquid having excellent energy saving properties, and the CO₂ recovery heat duty can be reduced.
(6) In the composite amine absorption liquid according to the sixth aspect, (b) the cyclic diamine containing amino groups having the same number of substituents includes at least one of cyclic diamines represented by Chemical Formula (4).
   According to the configuration, it is possible to provide the composite amine absorption liquid having excellent energy saving properties, and the CO₂ recovery heat duty can be reduced.
(7) In the composite amine absorption liquid according to the seventh aspect, (e) the chain monoamine includes at least one of a chain monoalkanolamine containing a primary amino group, a chain monoalkanolamine containing a secondary amino group, and a chain monoalkanolamine containing a tertiary amino group.
   According to the configuration, it is possible to provide the composite amine absorption liquid having excellent energy saving properties, and the CO₂ recovery heat duty can be reduced.
(8) In the composite amine absorption liquid according to an eighth aspect, a total concentration of (a) the diamine containing amino groups having different numbers of substituents, (b) the cyclic diamine containing amino groups having the same number of substituents, and (c) the cyclic compound represented by Chemical Formula (1) is 20% by mass or more and 80% by mass or less of an entirety of the absorbing liquid.
   According to the configuration, the total concentration of each component can be set to be in the range, and thus, the absorbing liquid can be functioned favorably.
(9) In the composite amine absorption liquid according to the ninth aspect, a total concentration of (a) the diamine containing amino groups having different numbers of substituents, (b) the cyclic diamine containing amino groups having the same number of substituents, (c) the cyclic compound represented by Chemical Formula (1), and (e) the chain monoamine is 20% by mass or more and 80% by mass or less of the entirety of the absorbing liquid.

According to the configuration, the total concentration of each component can be set to be in the range, and thus, the absorbing liquid can be functioned favorably.

### [Reference Signs List]

12: CO₂ Recovery apparatus
13: Industrial combustion equipment
14: Exhaust gas
16: Exhaust gas cooling apparatus
17: CO₂ Absorbing liquid (lean solution)
18: CO₂ Absorber
19: CO₂ Absorbing liquid (rich solution) that has absorbed CO₂
20: Absorbing liquid regenerator
21: Washing water

## Claims

1. A composite amine absorption liquid that absorbs at least one of CO₂ and H₂S in a gas, the composite amine absorption liquid comprising:
(a) a diamine containing amino groups having different numbers of substituents;
(b) a cyclic diamine containing amino groups having the same number of substituents;
(c) a cyclic compound represented by Chemical Formula (1); and
(d) water, 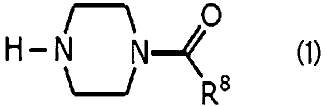 (in the formula, R⁸ is hydrogen or a methyl group).

2. The composite amine absorption liquid according to Claim 1, further comprising:
(e) a chain monoamine.

3. The composite amine absorption liquid according to Claim 1,
wherein (a) the diamine containing amino groups having different numbers of substituents includes at least one of diamines containing a tertiary amino group.

4. The composite amine absorption liquid according to Claim 1,
wherein (a) the diamine containing amino groups having different numbers of substituents includes at least one of cyclic diamines represented by Chemical Formula (2), 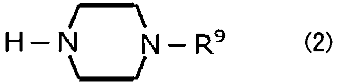
(in the formula, R⁹ is a hydrocarbon group having 1 to 4 carbon atoms).

5. The composite amine absorption liquid according to Claim 1,
wherein (a) the diamine containing amino groups having different numbers of substituents includes at least one of chain diamines represented by Chemical Formula (3), 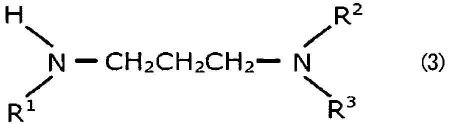
(in the formula, R¹ is hydrogen or a hydrocarbon group having 1 to 4 carbon atoms, and R² and R³ are each a hydrocarbon group having 1 to 4 carbon atoms).

6. The composite amine absorption liquid according to Claim 1,
wherein (b) the cyclic diamine containing amino groups having the same number of substituents includes at least one of cyclic diamines represented by Chemical Formula (4), 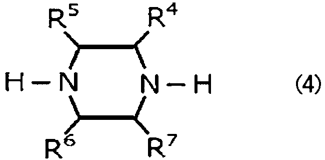
(in the formula R⁴ to R⁷ are each hydrogen or a methyl group).

7. The composite amine absorption liquid according to Claim 2,
wherein (e) the chain monoamine includes at least one of a chain monoalkanolamine containing a primary amino group, a chain monoalkanolamine containing a secondary amino group, and a chain monoalkanolamine containing a tertiary amino group.

8. The composite amine absorption liquid according to Claim 1,
wherein a total concentration of (a) the diamine containing amino groups having different numbers of substituents, (b) the cyclic diamine containing amino groups having the same number of substituents, and (c) the cyclic compound represented by Chemical Formula (1) is 20% by mass or more and 80% by mass or less of an entirety of the absorbing liquid.

9. The composite amine absorption liquid according to Claim 2,
wherein a total concentration of (a) the diamine containing amino groups having different numbers of substituents, (b) the cyclic diamine containing amino groups having the same number of substituents, (c) the cyclic compound represented by Chemical Formula (1), and (e) the chain monoamine is 20% by mass or more and 80% by mass or less of an entirety of the absorbing liquid.
